# EUROPÄISCHE PATENTSCHRIFT

(11) **EP 3 203 544 B1**
(45) Veröffentlichungstag und Bekanntmachung des Hinweises auf die Patenterteilung: **02.01.2019**
(21) Anmeldenummer: 17000144.0
(22) Anmeldetag: 30.01.2017
(51) Int. Cl.: H01M 2/02, H01M 2/30

(54) **AKKUBLOCK MIT MEHREREN AKKUZELLEN, VERWENDUNG EINES AKKUBLOCKS IN EINEM ELEKTRISCHEN GERÄT UND VERFAHREN ZUR HERSTELLUNG EINES AKKUBLOCKS**
BATTERY BLOCK WITH A PLURALITY OF BATTERY CELLS, USE OF A BATTERY BLOCK IN AN ELECTRICAL APPARATUS AND METHOD OF PRODUCING A BATTERY BLOCK
BLOC ACCUMULATEUR COMPRENANT PLUSIEURS ÉLÉMENTS ACCUMULATEURS, UTILISATION D'UN BLOC ACCUMULATEUR DANS UN APPAREIL ÉLECTRIQUE ET PROCÉDÉ DE FABRICATION D'UN BLOC ACCUMULATEUR

(30) Priorität: 05.02.2016 DE 102016001287
(43) Veröffentlichungstag der Anmeldung: 09.08.2017
(73) Patentinhaber: SWITOP GmbH, 8309 Nürensdorf (CH)
(72) Erfinder: SEIFRIED, Norbert, 78333 Stockach (DE)
(74) Vertreter: Riegel, Werner

(56) Entgegenhaltungen:
- WO-A2-2010/045477
- DE-U1- 8 907 055
- US-A1- 2013 295 425
- US-A1- 2014 023 906

## Beschreibung

Die Erfindung betrifft einen Akkublock mit mehreren Akkuzellen gemäß den Merkmalen des Patentanspruchs 1, die Verwendung eines Akkublocks in einem elektrischen Gerät gemäß den Merkmalen des Patentanspruchs 9 sowie ein Verfahren zur Herstellung eines Akkublocks gemäß den Merkmalen des Patentanspruchs 10.

Medizinische Geräte werden in herkömmlicher Weise sterilisiert oder desinfiziert, indem entweder Wärme verwendet wird, wie sie beispielsweise durch Dampf zur Verfügung gestellt wird, oder ein chemischer Stoff in flüssigem, gasförmigem oder dampfförmigem Zustand. Vor einer Sterilisierung oder Desinfektion werden die zu behandelnden Geräte normalerweise zunächst gereinigt und dann sterilisiert oder desinfiziert. Nach einer Sterilisation oder Desinfektion mit einem flüssigen, keimtötenden chemischen Stoff wird gereinigtes Wasser verwendet, um die Instrumente zu spülen, und anschließend werden die Instrumente getrocknet.

Bei elektrischen medizinischen Geräten, wie z.B. einer Akkubohrmaschine ergibt sich das Problem, dass der verwendete Akkublock in der Regel die Temperatur, Feuchtigkeit und Drucke, welche bei einer Sterilisation vorherrschen nicht standhält. Daher werden in der Medizintechnik üblicherweise nicht-sterilisierte Akkublocks in sterilisierte elektrische medizinische Geräte eingebaut. Hierbei kann es aber dennoch zu einer unerwünschten Kontaminationen führen.

In DE 699 29 674 T3 und US2014/0342204A1 wird der durch mehrere Schichten gebildete Aufbau des Gehäuses von herkömmlichen Akkuzellen offenbart.

Aus DE 8907055 A1 ist ein elektrisches medizinisches Gerät mit einem Akkublock offenbart, welcher die Umgebungsbedingungen bei einer Sterilisation aushält. Bei dem beschriebenen Akkublock handelt es sich um einen herkömmlichen Akkublock, welcher in einer ersten Schicht mit einer Polysulfon-Folie und in einer zweiten Schicht mit einer Polyäthylentherathalt umwickelt ist. Eine dritte Schicht bildet ein Schrumpfschlauch und eine vierte Schicht wird von einer Vergussmasse gebildet.

Ausgehend von dem Stand der Technik ist es eine Aufgabe der Erfindung einen verbesserten Akkublock anzugeben mit einer verbesserten Temperaturbeständigkeit, einer verbesserten Druckbeständigkeit und einer verbesserten Beständigkeit gegen Feuchtigkeit beim Sterilisationsprozess. Weitere Aufgabe bestehen in der Angabe eines Verwendungsverfahrens und eines Verfahrens zur Herstellung eines solchen Akkublocks.

Diese Aufgaben werden mit den unabhängigen Ansprüchen 1, 9 und 10 gelöst. Vorteilhafte Ausführungen sind Gegenstand von Unteransprüchen.

Der erfindungsgemäße Akkublock umfasst mehrere handelsübliche Akkuzellen. Diese mehreren Akkuzellen sind von einer Umhüllung umgeben, wobei die Umhüllung eine Schicht aus Polyethylenterephthalat, einen Schrumpfschlauch und eine Vergussmasse aufweist. Gemäß der Erfindung ist jede einzelne Akkuzelle mit einer Polyimideschicht umgeben. Die Umhüllung bzw. Teile der Umhüllung können dabei als Gehäuse des Akkublocks dienen. Insbesondere kann die Vergussmasse das Gehäuse des Akkublocks darstellen. Mit anderen Worten, der erfindungsgemäße Akkublock besteht somit aus mehreren, jeweils mit einer Polyimideschicht überzogenen Akkuzellen, welche eine Anordnung von mit einer Polyimideschicht überzogenen Akkuzellen bilden. Diese Anordnung von mit einer Polyimideschicht überzogenen Akkuzellen ist mit einer Schicht aus Polyethylenterephthalat umhüllt, umwickelt, umgeben oder überzogen.

Unter einer Akkuzelle wird im Weiteren eine handelsübliche wiederaufladbare Sekundärzelle, z.B. ein Lithium-Ionen-Akkumulator oder auf Lithium basierender Akkumulator (z.B. Lithium-Schwefel-Akkumulator), Nickel-Cadmium.Akkumulator, Nickel-Metallhydrid-Akkumulator, Nickel-Zink-Akkumulator oder Alkali-Mangan-Akkumulator verstanden. Selbstverständlich können auch andere Typen von wiederaufladbare Akkumulatoren Verwendung finden.

Die Akkuzellen können handelsübliche Größen, wie z.B. AA- oder AAA-Typen aufweisen.

Unter Polyethylenterephthalat, auch als PET oder PEPT bezeichnet, wird ein durch Polykondensation hergestellter thermoplastischer Kunststoff verstanden. Polyethylenterephthalat hat vielfältige Einsatzbereiche und wird unter anderem zur Herstellung von Kunststoffflaschen (PET-Flaschen), Folien und Textilfasern verwendet.

Unter Polyimide werden im allgemeinen Kunststoffe verstanden, deren wichtigstes Strukturmerkmal die Imidgruppe ist. Dazu gehören u. a. Polysuccinimid (PSI), Polybismaleinimid (PBMI), Polybenzimidazol (PBI) und Polyoxadiazobenzimidazol (PBO), Polyimidsulfon (PISO) und Polymethacrylimid (PMI).

Mit der Polyimideschicht um die einzelnen Akkuzellen wird eine sehr hohe Wärmebeständigkeit von mehr als 200°C erreicht. Ferner wird dadurch erreicht, dass bei den hohen Temperaturen während des Sterilisationsprozesses keine unerwünschten Gase freigesetzt werden. Schließlich wird durch den Einsatz der Polyimideschicht um jede einzelne Akkuzelle gewährleistet, dass es zwischen den Akkuzellen zu keinem Kurzschluss kommen kann.

Die Polyimideschicht kann eine Polyimide-Folie mit wärmehärtendem Silikonklebstoff sein, wobei die Folie um jede einzelne Akkuzelle mindestens einmal gewickelt ist. Damit ist sichergestellt, dass sich die Polyimide-Folie sich bei Temperaturschwankungen nicht von der Akkuzelle ablöst. Durch die Verwendung des Silikonklebers ist sichergestellt, dass es zu keinem Freisetzen von unerwünschten Gasen kommt.

In einer Ausführungsform der Erfindung sind die mehreren Akkuzellen innerhalb der Umhüllung in einer vorgegebenen Anordnung miteinander verschaltet. Zweckmäßig sind die mehreren Akkuzellen in einer Serienschaltung miteinander verschaltet. So ist es möglich, bei Verwendung mehrerer Akkuzellen mit vorgegebener Nennspannung einen Akkublock mit einer entsprechenden Summen-Nennspannung zu erzeugen. Bei Verwendung von z.B. 10 wieder aufladbaren Alkali-Mangan-Akkuzellen mit einer Nennspannung von jeweils 1,5 V beträgt die Gesamt-Nennspannung des Akkkublocks 15 V auf. Die verschaltete Anordnung von den mehreren Akkuzellen ist zweckmäßig mit einer Silikonkabellitze für den Kathodenableiter (Minuspol) und einer Silikonkabellitze für den Anodenableiter (Pluspol) versehen. Diese beiden Silikonkabellitzen sind zweckmäßig nach außen geführt und dienen dem Anschluss eines Ladegeräts.

In einer weiteren Ausführungsform der Erfindung ist die Schicht aus Polyethylen-terephthalat aus einer Polyethylenterephthalat-Folie gebildet, welche mindestens zehnmal um die mehreren Akkuzellen gewickelt ist. Es sei hier darauf hingewiesen, dass die Polyethylenterephthalat-Folie nicht um eine einzelne Akkuzelle gewickelt ist, sondern um die gesamte Anordnung der miteinander verschalteten Akkuzellen. Die Polyethylen-terephthalat-Folie weist sehr gute Wärmeisolationseigenschaften auf, wodurch die umhüllten Akkuzellen vor den hohen Temperaturen beim Sterilisationsprozess geschützt werden. Dieser Effekt wird durch die mindestens 10 Wicklungen. Aufgrund des sich zwischen den einzelnen Wicklungen befindlichen Restluftanteils wird zwischen den einzelnen Wicklungen ein Luftpolster gebildet, welches die Isolierungseigenschaft noch verstärkt. Selbstverständlich ist es möglich, dass die mindestens 10 Wicklungen durch eine entsprechende Anzahl von Lagen einer Polyethylenterephthalat-Folie gebildet sind.

In einer weiteren Ausführungsform der Erfindung ist die Dicke der Schicht aus Polyethylenterephthalat größer als 1 mm. Damit ist sichergestellt, dass die umhüllten Akkuzellen während des gesamten Sterilisationsprozesses vor zu hoher Temperatur geschützt sind.

In einer weiteren Ausführungsform der Erfindung ist innerhalb der Umhüllung ein Temperatursensor angeordnet, mit nach außen führenden Silikonkabellitzen zum Anschließen an eine Sicherheitsschaltung. Mit diesem Temperatursensor ist es möglich, den Ladevorgang der mehreren Akkuzellen zu überwachen. Bei Überschreiten einer vorgegebenen Temperatur der Akkuzellen beim Ladevorgang kann über eine elektrische Steuerschaltung, an welche der Temperatursensor anschließbar ist, der Ladevorgang abgebrochen werden, um ein Überhitzen der Akkuzellen zu verhindern.

Zweckmäßig befindet sich Temperatursensor innerhalb der Umhüllung. Mit anderen Worten, die Schicht aus Polyethylenterephthalat umgibt somit die mehreren Akkuzellen und den Temperatursensor. Hierzu ist der Temperatursensor z.B. an einer oder mehreren Akkuzellen befestigt, z.B. mittels Silikonkleber.

In einer weiteren Ausführungsform der Erfindung ist der Schrumpfschlauch aus Silikon gefertigt. Der Schrumpfschlauch umhüllt die mit der Schicht aus Polyethylen-terephthalat umhüllte Anordnung von miteinander verschalteten Akkuzellen. Der Schrumpfschlauch dient im Wesentlichen der Fixierung der Schicht aus Polyethylen-terephthalat.

In einer weiteren Ausführungsform der Erfindung ist die Vergussmasse ein kaltpolymerisierender Kunststoff. Ein Vorteil von kaltpolymerisierendem Kunststoff ist seine Bruchbeständigkeit. Ein weiterer Vorteil ist, dass kaltpolymerisierender Kunststoff in der Medizintechnik bereits für Implantatarbeiten und als Prothesenkunststoff eingesetzt wird. Der erfindungsgemäße Akkublock ist somit mit einem Kunststoff umgeben, welcher in der Medizintechnik bereits etabliert ist. Die Gefahr einer gefährlichen Kontamination durch den Akkublock kann somit nahezu ausgeschlossen werden.

Ein weiterer Aspekt der Erfindung ist die Verwendung eines erfindungsgemäßen Akkublocks in einem elektrischen Gerät. Das elektrische Gerät kann zweckmäßig ein medizinisches Gerät umfassend ein Gehäuse mit einer elektrischen Maschine sein, z.B. ein Akkubohrer. Selbstverständlich kann es sich bei dem elektrischen Gerät aber auch um ein anderes im Akkubetrieb betreibbares Gerät handeln.

Die Erfindung zeichnet sich ferner durch ein Verfahren zur Herstellung eines Akkublocks aus. Das erfindungsgemäße Verfahren umfasst dabei folgende Schritte:
a) Bereitstellen von mehreren einzelnen Akkuzellen
b) Aufbringen einer Polyimideschicht um jede einzelne Akkuzellen,
c) Verschaltender einzelnen Akkuzellen in einer Serienschaltung,
d) Aufbringen einer Schicht aus Polyethylenterephthalat um die mehreren miteinander verschalteten Akkuzellen,
e) Aufbringen eines Schrumpfschlauchs auf die Schicht aus Polyethylen-terephthalat,
f) Vergießen der in den vorangehenden Verfahrensschritten umhüllten Akkuzellen mit einem kaltpolymerisierenden Kunststoff.

Der Schritt a) des Bereitstellens von mehreren einzelnen Akkuzellen kann insbesondere das Entfernen einer die herkömmlichen, handelsüblichen Akkuzellen umgebenden Folie mit Werbeaufdrucken umfassen.

Die Erfindung sowie weitere Vorteile werden im Weiteren anhand von Figuren näher erläutert. Es zeigen
- Fig. 1: einen beispielhaften schematischen Aufbau eines erfindungsgemäßen Akkublocks,
- Fig. 2: beispielhaft eine Schnittdarstellung eines medizinischen Geräts mit einem erfindungsgemäßen Akkublock,
- Fig. 3: den Ablauf eines erfindungsgemäßen Verfahrens.

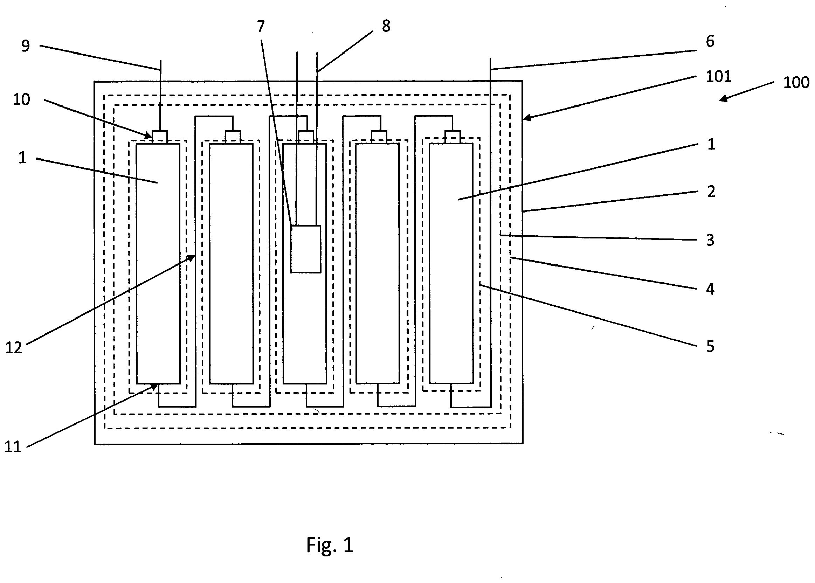

Fig. 1 zeigt den beispielhaften schematischen Aufbau eines erfindungsgemäßen Akkublocks. Der Akkublock 100 ist beispielhaft mit 5 Akkuzellen 1 aufgebaut und weist eine Umhüllung 101 auf. Selbstverständlich kann der Akkublock 100 auch aus mehreren oder weniger Akkuzellen 1 bestehen. Die Umhüllung 101 ist gebildet aus einer Polyethylenterephthalatfolie 3, einem Schrumpfschlauch 4 und einer Vergussmasse 2. Die Umhüllung 101 umgibt dabei die 5 Akkuzellen 1 vollständig.

Jede einzelne Akkuzelle 1 ist mit einer Polyimide-Folie 5 mit wärmehärtendem Silikonklebstoff umgeben. Jede Akkuzelle 1 weist eine Anode 10 und eine Kathode 11 auf. Die Anoden 10 und Kathoden 11 der einzelnen Akkuzellen 1 sind in Fig. 1 beispielhaft von rechts nach links in einer Serienschaltung 12 miteinander verschaltet. Beispielhaft ist die Anode 10 (Pluspol) der linken Akkuzelle 1 mit einem Anodenableiter 9 verbunden. Dieser Anodenableiter 9 ist mit einer Schnittstelle (nicht dargestellt) außerhalb des Akkublocks 100 zur Verbindung mit einem Ladegerät (nicht dargestellt) verbunden. Beispielhaft ist die Kathode 11 (Minuspol) der rechten Akkuzelle 1 mit einem Kathodenableiter 6 verbunden. Dieser Kathodenableiter 6 ist mit einer Schnittstelle (nicht dargestellt) außerhalb des Akkublocks 100 zur Verbindung mit einem Ladegerät (nicht dargestellt) verbunden.

An der mittleren Akkuzelle 1 ist beispielhaft ein Temperatursensor 7 angebracht. Dieser Temperatursensor 7 weist Silikonlitzen 8, welche mit einer Schnittstelle (nicht dargestellt) außerhalb des Akkublocks 100 verbunden sind zur Verbindung mit einem Steuergerät (nicht dargestellt).

Die Anordnung der miteinander verschalteten Akkuzellen 1 sind mit einer Folie 3 aus Polyethylenterephthalat umhüllt. Diese Folie 3 ist mindestens zehnmal (nicht dargestellt) um die verschaltete Anordnung der beispielhaft 5 Akkuzellen 1 gewickelt. Diese Anordnung umgibt weiterhin ein Schrumpfschlauch aus Silikon. Als äußere Schicht des Gehäuses 23 ist eine Vergussmasse 2 aus einem kaltpolymerisierendem Kunststoff vorhanden. Aus Akkublock 100 ragen somit lediglich der Anodenableiter 9, der Kathodenableiter 6 und die Silikonlitzen 8 des Temperatursensors 7.

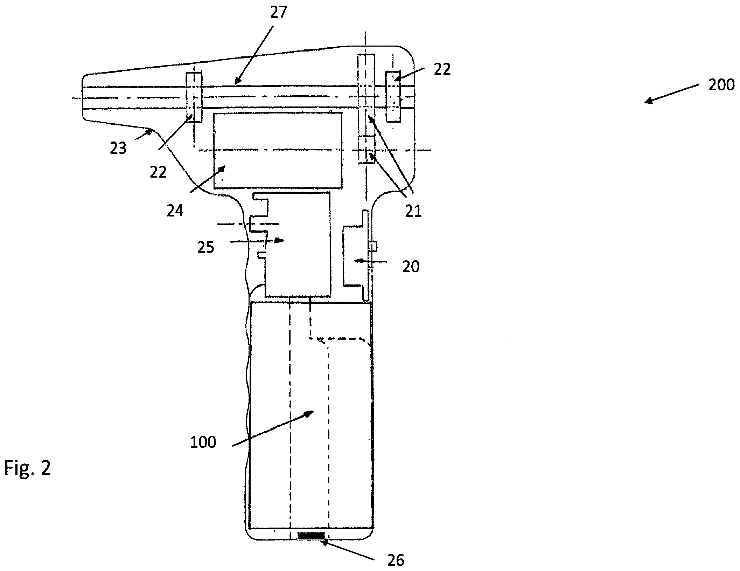

Fig. 2 zeigt beispielhaft eine Schnittdarstellung eines medizinischen Geräts mit einem erfindungsgemäßen Akkublock. Das medizinische Gerät 200 ist beispielhaft eine Akkubohrmaschine. Die Akkubohrmaschine weist ein Gehäuse 23 zur Aufnahme eines Lagers 22 für die Antriebswelle 27 des Bohrers (nicht dargestellt). Ferner ist in dem Gehäuse 23 ein Getriebe 21 vorhanden, welches die Welle 27 und einen elektrischen Motor 24 verbindet. Im Griff des Akkubohrmaschine, d.h. im unteren Bereich des Gehäuses 23 ist eine Aussparung für den Akkublock 100 vorgesehen. Am Gehäuse 23 ist eine Schnittstelle 26 zur Verbindung mit einem Ladegerät (nicht dargestellt) vorhanden, welche mit dem Anodenableiter 9 und dem Kathodenableiter 6 des Akkublocks 100 verbunden sind. Ferner ist im Gehäuse 23 des Akkubohrers noch eine Elektronikschaltung/Steuerschaltung 25 vorhanden, welche über einen Schalter 20 den Akkubohrer 200 ein- bzw. ausschaltet, die Geschwindigkeit des elektrischen Motors einstellt oder den Ladevorgang aufgrund einer vom Temperatursensor registrierten Temperaturüberschreitung abbricht.

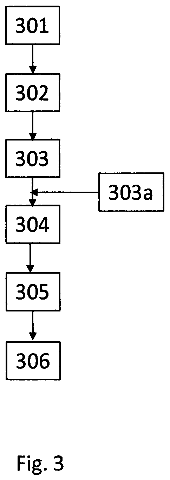

Fig. 3 zeigt den Ablauf eines erfindungsgemäßen Verfahrens. Im Schritt 301 werden mehrere einzelne Akkuzellen 1 bereitgestellt. Zweckmäßig werden diese Akkuzellen 1 bereits im Schritt 301 von der Kunststofffolie befreit, welche die handelsüblichen Akkuzellen 1 umgibt und mit diversen Herstellerangaben versehen ist. Anschließend wird in einem Schritt 302 um jede einzelne Akkuzelle 1 eine Polyimideschicht gelegt und zwar in Form einer Polyimide-Folie, welche mindestens einmal um die einzelne Akkuzelle 1 gewickelt wird. In einem anschließenden Schritt 303 werden die einzelnen Akkuzellen 1 in einer Serienschaltung miteinander verschaltet. Die Verschaltung erfolgt zweckmäßig mittels Silikonlitzen, welche an die Anoden bzw. Kathoden der einzelnen Akkuzellen 1 gelötet werden. Hierbei wird zweckmäßig das Anbringen der Anoden- und Kathodenableiter an die entsprechenden Akkuzellen 1 vorgesehen. In einem optionalen Schritt 303a kann an die bislang hergestellte Anordnung ein Temperatursensor angebracht werden, zweckmäßig wird dieser Temperatursensor mit Silikonkleber an eine Akkuzelle geklebt.

In einem weiteren Schritt 304 wird eine Schicht aus Polyethylenterephthalat um die mehreren miteinander verschalteten Akkuzellen aufgebracht und zwar in Form einer Folie aus Polyethylenterephthalat, welche mindestens zehnmal um die miteinander verschalteten Akkuzellen 1 des Akkublock 100 gewickelt wird. In einem weiteren Schritt 305 wird auf die Schicht aus Polyethylenterephthalat bzw. die Wicklungen der Polyethylenterephthalat-Folie ein Schrumpfschlauch aufgebracht. Dieser Schrumpfschlauch wird mittels Wärmeeintrag geschrumpft, bis er vollständig an der Anordnung der Akkuzellen anliegt. In einem abschließenden Schritt 306 wird die Anordnung mit einem kaltpolymerisierendem Kunststoff umgeben. Hierzu wird die Anordnung in eine Vergussform gegeben, in welcher die in den vorangegangenen Schritten hergestellte Anordnung vollständig vergossen wird.

### Bezugszeichenliste

- 100: Akkublock
- 101: Umhüllung
- 1: Akkuzelle
- 2: Vergussmasse
- 3: Polyethylenterephthalatfolie/ Polyethylenterephthalatschicht
- 4: Schrumpfschlauch
- 5: Polyimidefolie/ Polyimideschicht
- 6: Kathodenableiter
- 7: Temperatursensor
- 8: Silikonlitze Temperatursensor
- 9: Anodenableiter
- 10: Anode
- 11: Kathode
- 12: Verschaltung
- 200: Medizinisches Gerät
- 20: Schalter
- 21: Getriebe
- 22: Lager
- 23: Gehäuse
- 24: elektrische Maschine, Motor
- 25: Elektronik/Steuerschaltung
- 26: Schnittstelle zu Ladegerät
- 27: Welle
- 301: Schritt a)
- 302: Schritt b)
- 303: Schritt c)
- 303a: Anordnen eines Temperatursensors
- 304: Schritt d)
- 305: Schritt e)
- 306: Schritt f)

## Patentansprüche

1. Akkublock umfassend mehrere handelsübliche Akkuzellen (1), wobei die mehreren Akkuzellen (1) von einer Umhüllung (101) umgeben sind, welche eine Schicht aus Polyethylenterephthalat (3), einen Schrumpfschlauch (4) und eine Vergussmasse (2) aufweist,
**dadurch gekennzeichnet, dass**
jede einzelne Akkuzelle (1) mit einer Polyimideschicht (5) umgeben ist.

2. Akkublock nach Anspruch 1, **dadurch gekennzeichnet, dass** die Polyimideschicht (5) eine Polyimide-Folie mit wärmehärtendem Silikonklebstoff ist, wobei die Folie um jede einzelne Akkuzelle (1) mindestens einmal gewickelt ist.

3. Akkublock nach einem der vorangehenden Ansprüche, **dadurch gekennzeichnet, dass** die mehreren Akkuzellen (1) innerhalb der Umhüllung (101) in einer vorgegeben Anordnung miteinander verschaltet (12) sind mit jeweils einem, aus der Umhüllung (101) herausgeführten mit Silikonlitzen versehenen Kathodenableiter (6) und Anodenableiter (9) zum Anschließen eines Ladegeräts.

4. Akkublock nach einem der vorangehenden Ansprüche, **dadurch gekennzeichnet, dass** die Schicht (3) aus Polyethylenterephthalat aus einer Polyethylenterephthalat-Folie gebildet ist, welche mindestens zehnmal um die mehreren Akkuzellen (1) gewickelt ist.

5. Akkublock nach einem der vorangehenden Ansprüche, **dadurch gekennzeichnet, dass** die Dicke der Schicht (3) aus Polyethylenterephthalat größer als 1 mm ist.

6. Akkublock nach einem der vorangehenden Ansprüche, **dadurch gekennzeichnet, dass** innerhalb der Umhüllung (101) ein Temperatursensor (7) angeordnet ist mit nach außen führenden Silikonkabellitzen (8) zum Anschließen an eine Sicherheitsschaltung.

7. Akkublock nach einem der vorangehenden Ansprüche, **dadurch gekennzeichnet, dass** die Vergussmasse (2) ein kaltpolymerisierender Kunststoff ist.

8. Akkublock nach einem der vorangehenden Ansprüche, **dadurch gekennzeichnet, dass** der Schrumpfschlauch (4) aus Silikon gefertigt ist.

9. Verwendung eines Akkublocks (100) gemäß einem der vorangehenden Ansprüchen 1 bis 8 in einem elektrischen Gerät.

10. Verfahren zur Herstellung eines Akkublocks (100) umfassend folgende Schritte:
a) Bereitstellen (301) von mehreren einzelnen Akkuzellen,
b) Aufbringen (302) einer Polyimideschicht um jede einzelne Akkuzellen,
c) Verschalten (303) der einzelnen Akkuzellen in einer Serienschaltung,
d) Aufbringen (304) einer Schicht aus Polyethylenterephthalat um die mehreren miteinander verschalteten Akkuzellen,
e) Aufbringen (305) eines Schrumpfschlauchs auf die Schicht aus Polyethylen-terephthalat,
f) Vergießen (306) der in den vorangehenden Verfahrensschritten umhüllten Akkuzellen mit einem kaltpolymerisierendem Kunststoff.

11. Verfahren zur Herstellung eines Akkublocks gemäß Anspruch 10, **dadurch gekennzeichnet, dass** Schritt c) das Anbringen eines nach außen führenden Kathodenableiters und Anodenableiters umfasst.

12. Verfahren zur Herstellung eines Akkublocks gemäß Anspruch 10 oder 11, **dadurch gekennzeichnet, dass** zwischen Schritt c) (303) und Schritt d) (304) ein weiterer Schritt (303a) vorgesehen ist, bei welchem ein Temperatursensor (7) an eine oder mehrere Akkuzellen (1) befestigt wird.

13. Verfahren zur Herstellung eines Akkublocks gemäß einem der Ansprüche 10 bis 12, **dadurch gekennzeichnet, dass** im Schritt b) jede einzelne Akkuzelle (1) mit einer Polyimide-Folie (5) mit mindestens einer Wicklung umwickelt wird.

14. Verfahren zur Herstellung eines Akkublocks gemäß einem der Ansprüche 10 bis 13, **dadurch gekennzeichnet, dass** im Schritt d) die mehreren in Schritt c) miteinander verschalteten Akkuzellen mit einer Polyethylenterephthalat-Folie mit mindestens 10 Wicklungen umwickelt werden.

15. Verfahren zur Herstellung eines Akkublocks gemäß einem der Ansprüche 10 bis 14, **dadurch gekennzeichnet, dass** im Schritt f) eine in den vorangehenden Schritten hergestellte Anordnung in eine Vergussform verbracht wird.

## Claims

1. Battery block comprising a plurality of commercially available battery cells (1), wherein the plurality of battery cells (1) are surrounded by an encapsulation (101), which comprises a layer of polyethylene terephthalate (3), a shrink tube (4) and a potting compound (2),
**characterized in that**
each individual battery cell (1) is surrounded by a polyimide layer (5).

2. Battery block according to Claim 1, **characterized in that** the polyimide layer (5) is a sheet of polyimide comprising heat-curing silicone adhesive, wherein the sheet is wound at least once around each individual battery cell (1).

3. Battery block according to one of the preceding claims, **characterized in that** the plurality of battery cells (1) within the encapsulation (101) are interconnected with one another in a predetermined arrangement (12), with in each case a cathode collector (6) and an anode collector (9) led out of the encapsulation (101) and provided with silicone stranded wires for connecting a charger.

4. Battery block according to one of the preceding claims, **characterized in that** the layer (3) of polyethylene terephthalate is formed by a sheet of polyethylene terephthalate that is wound at least 10 times around the plurality of battery cells (1).

5. Battery block according to one of the preceding claims, **characterized in that** the thickness of the layer (3) of polyethylene terephthalate is greater than 1 mm.

6. Battery block according to one of the preceding claims, **characterized in that** a temperature sensor (7) with silicone-cable stranded wires (8) leading to the outside for connecting to a safety circuit is arranged within the encapsulation (101).

7. Battery block according to one of the preceding claims, **characterized in that** the potting compound (2) is a cold-polymerizable plastic.

8. Battery block according to one of the preceding claims, **characterized in that** the shrink tube (4) is produced from silicone.

9. Use of a battery block (100) according to one of the preceding Claims 1 to 8 in an electrical device.

10. Method for producing a battery block (100) comprising the following steps:
a) providing (301) a plurality of individual battery cells,
b) applying (302) a polyimide layer around each individual battery cells,
c) interconnecting (303) the individual battery cells in a series circuit,
d) applying (304) a layer of polyethylene terephthalate around the plurality of interconnected battery cells,
e) applying (305) a shrink tube to the layer of polyethylene terephthalate,
f) potting (306) the battery cells encapsulated in the preceding method steps with a cold-polymerizable plastic.

11. Method for producing a battery block according to Claim 10, **characterized in that** step c) comprises attaching a cathode collector and an anode collector leading to the outside.

12. Method for producing a battery block according to Claim 10 or 11, **characterized in that** between step c) (303) and step d) (304) there is provided a further step (303a), in which a temperature sensor (7) is fastened to one or more battery cells (1).

13. Method for producing a battery block according to one of Claims 10 to 12, **characterized in that** in step b) each individual battery cell (1) is wrapped in a sheet of polyimide (5) with at least one winding.

14. Method for producing a battery block according to one of Claims 10 to 13, **characterized in that** in step d) the plurality of battery cells interconnected to one another in step c) are wrapped in a sheet of polyethylene terephthalate with at least 10 windings.

15. Method for producing a battery block according to one of Claims 10 to 14, **characterized in that** in step f) an arrangement produced in the previous steps is brought into a potting mould.

## Revendications

1. Bloc d'accumulateur comprenant plusieurs cellules d'accumulateur (1) d'usage courant, les plusieurs cellules d'accumulateur (1) étant entourées par une enveloppe (101) qui possède une couche de polytéréphtalate d'éthylène (3), une gaine rétractable (4) et une masse d'enrobage (2),
**caractérisé en ce que**
chaque cellule d'accumulateur (1) individuelle est entourée par une couche de polyimide (5).

2. Bloc d'accumulateur selon la revendication 1, **caractérisé en ce que** la couche de polyimide (5) est un film en polyimide avec un adhésif au silicone durci à chaud, le film étant enroulé au moins une fois autour de chaque cellule d'accumulateur (1) individuelle.

3. Bloc d'accumulateur selon l'une des revendications précédentes, **caractérisé en ce que** les plusieurs cellules d'accumulateur (1) à l'intérieur de l'enveloppe (101) sont interconnectées (12) les unes avec les autres selon un arrangement prédéfini, respectivement avec un conducteur de départ de cathode (6) et un conducteur de départ d'anode (9) destinés au raccordement d'un chargeur, amenés hors de l'enveloppe (101) et munis de torons en silicone.

4. Bloc d'accumulateur selon l'une des revendications précédentes, **caractérisé en ce que** la couche (3) de polytéréphtalate d'éthylène est formée d'un film en polytéréphtalate d'éthylène qui est enroulé au moins dix fois autour des plusieurs cellules d'accumulateur (1).

5. Bloc d'accumulateur selon l'une des revendications précédentes, **caractérisé en ce que** l'épaisseur de la couche (3) de polytéréphtalate d'éthylène est supérieure à 1 mm.

6. Bloc d'accumulateur selon l'une des revendications précédentes, **caractérisé en ce qu'**une sonde de température (7) est disposée à l'intérieur de l'enveloppe (101), laquelle comprend des torons de câble en silicone (8) acheminés à l'extérieur destinés au raccordement à un circuit de sécurité.

7. Bloc d'accumulateur selon l'une des revendications précédentes, **caractérisé en ce que** la masse d'enrobage (2) est une matière plastique polymérisable à froid.

8. Bloc d'accumulateur selon l'une des revendications précédentes, **caractérisé en ce que** la gaine rétractable (4) est fabriquée en silicone.

9. Utilisation d'un bloc d'accumulateur (100) selon l'une des revendications 1 à 8 dans un appareil électrique.

10. Procédé de fabrication d'un bloc d'accumulateur (100), comprenant les étapes suivantes :
a) fourniture (301) de plusieurs cellules d'accumulateur individuelles,
b) application (302) d'une couche de polyimide autour de chaque cellules d'accumulateur individuelles,
c) interconnexion (303) des cellules d'accumulateur individuelles en un circuit série,
d) application (304) d'une couche de polytéréphtalate d'éthylène autour des plusieurs cellules d'accumulateur interconnectées entre elles,
e) application (305) d'une gaine rétractable sur la couche de polytéréphtalate d'éthylène,
f) enrobage (306) des cellules d'accumulateur enveloppées dans les étapes précédentes du procédé avec une matière plastique polymérisable à froid.

11. Procédé de fabrication d'un bloc d'accumulateur selon la revendication 10, **caractérisé en ce que** l'étape c) comprend l'application d'un conducteur de départ de cathode et d'un conducteur de départ d'anode menant à l'extérieur.

12. Procédé de fabrication d'un bloc d'accumulateur selon la revendication 10 ou 11, **caractérisé en ce qu'**entre l'étape c) (303) et l'étape d) (304) est prévue une étape supplémentaire (303a), lors de laquelle une zone de température (7) est fixée au niveau d'une ou plusieurs cellules d'accumulateur (1).

13. Procédé de fabrication d'un bloc d'accumulateur selon l'une des revendications 10 à 12, **caractérisé en ce qu'**à l'étape b), chaque cellule d'accumulateur (1) individuelle est enveloppée avec au moins un tour d'un film en polyimide (5).

14. Procédé de fabrication d'un bloc d'accumulateur selon l'une des revendications 10 à 13, **caractérisé en ce qu'**à l'étape d), les plusieurs cellules d'accumulateur interconnectées les unes avec les autres à l'étape c) sont enveloppées avec au moins 10 tours d'un film en polytéréphtalate d'éthylène.

15. Procédé de fabrication d'un bloc d'accumulateur selon l'une des revendications 10 à 14, **caractérisé en ce qu'**à l'étape f), un arrangement produit dans les étapes précédentes est transféré dans un moule pour enrobage.
